# EUROPEAN PATENT APPLICATION

(11) **EP 1 445 658 A1**
(43) Date of publication of application: **11.08.2004**
(21) Application number: 03025093.0
(22) Date of filing: 03.11.2003
(51) Int. Cl.: G03G 15/00, G06F 3/12, H04L 29/06, H04L 29/08, H04N 1/32

(54) **Apparatus and methods for visually identifying the status report of a print job**

(30) Priority: 01.11.2002 JP 2002320052
(71) Applicant: Ricoh Company Ltd., Tokyo 143-8555 (JP)
(72) Inventor: Kohich, Kanaya, Yokohama-shi Kanagawa-ken (JP)
(74) Representative: Schwabe - Sandmair - Marx

(57) **Abstract**

An image processing apparatus is connected to a network via a LAN (local area network) and operative to perform printing and copying jobs upon request from a user. The image processing apparatus includes a thumbnail image data generating device generating thumbnail image data of a first page of the job. An electronic mail transmitting device is included in the image processing apparatus to transmit an electronic mail having a thumbnail image data of the first page to a mail address of the user when the job is completed or interrupted in the digital copier.

## Description

### Field

The present specification relates to a job progress reporting method and apparatus employed in a network environment, in which a digital copier, a printer, and a terminal apparatus are connected to the network via a LAN, in particular to a job progress reporting method and apparatus capable of visually reporting a job progressing condition from the digital copier to a remote terminal via the network. Background

A network infrastructure connecting various components, such as a digital copier, a printer, a scanner, etc., to a network via a LAN rapidly spreads in a business place. In such an environment, a plurality of terminal apparatuses (e.g. client workstations of personal computers) each having a network connection function shares these components in increasingly various manners. For example, when a printer is utilized through the network in such a conventional sharing manner, a terminal apparatus issues a printing job request to the printer as a job issuance source, and then receives various reports on a job such as completion, error, ongoing, etc., from the printer.

A prior art discusses in the Japanese Patent Application Laid Open Number 2001-216105 that a personal computer connected to a network transmits printing data to a printer connected to a network by a device other than an electronic mail. The printer then extracts an electronic mail address of the printing job issuance source from the printing data, and then informs prescribed information thereto by the electronic mail.

Another prior art discusses in the Japanese Patent Application Laid Open number 2000-200226 that a scanner connected to a network reads and transmits image data of an original document to a printer via the network, and the printer copies the image data on a sheet. Further, the prior art enables reporting a copy job status in a scanner or printer to an electronic mail destination previously registered in the scanner.

However, assuming that a remote terminal apparatus can receive such reports as in the above-mentioned patent publications, an operator operating the terminal apparatus hardly identify such a job from the reports.

### SUMMARY

A novel image processing apparatus that is connected to a network and operative to perform printing and copying jobs upon a request from a user. The image processing apparatus includes a thumbnail image data generating device generating thumbnail image data of image data processed by the job, in particular of at least a first page of the job and/or e.g. of image data representing a picture or figure, an electronic mail transmitting device transmitting an electronic mail having a thumbnail image data of the first page to a mail address of the user when the job is completed or interrupted.

In another embodiment, the electronic mail includes only a URL representing an information source to a mail address assigned to the terminal apparatus when at least one of the jobs is completed or interrupted.

In yet another embodiment, the mail address is associated with a user code and the image processing apparatus is operable when the user code is inputted and authenticated.

### BRIEF DESCRIPTION OF DRAWINGS

A more complete appreciation of the present invention and many of the attendant advantages thereof will be readily obtained as the same becomes better understood by reference to the following detailed description when considered in connection with the accompanying drawings, wherein:
Fig. 1 illustrates a digital copier connected to a network according to a preferred embodiment;
Fig. 2 illustrates a sheet conveyance path included in the digital copier;
Fig. 3 illustrates a control unit also included in the digital copier;
Fig. 4 illustrates a system control section and an image processing section included in the digital copier;
Fig. 5 illustrates an operational flow used when a copy job progressing condition is reported from the digital copier to a remote terminal through the network;
Fig. 6 illustrates an input screen provided in the digital copier for allowing a user to input a job;
Fig. 7 also illustrates a screen provided in the digital copier for allowing a user to input a job reporting request;
Fig. 8 illustrates a screen appearing when the digital copier is ready to copy;
Fig. 9 illustrates a correspondence between a user and a mail address;
Fig. 10 illustrates an exemplary screen displaying the job progressing report together with a thumbnail; and
Fig. 11 also illustrates an exemplary screen displaying the job progressing report together with a URL of a thumbnail source.

### PREFERRED EMBODIMENT

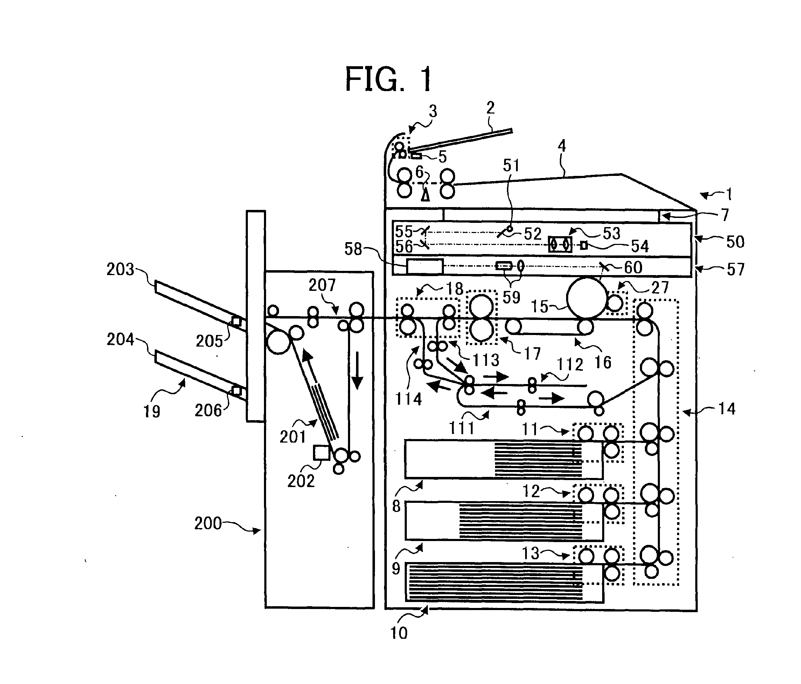

Referring now to the drawings, wherein like reference numerals designate identical or corresponding parts throughout the several views, and in particular in Fig. 1, a digital copier includes a reading unit 50 scanning and reading an original document set on an original document table 2. The reading unit 50 includes an optical scanning unit and an exposure platen 7 receiving the original document thereon. The optical unit includes an exposure lamp 51, a first mirror 52, a lens 53, and a CCD type image sensor 54 and similar parts. These exposure lamp 51 and first mirror 52 are secured to a fist carriage (not shown). The second and third mirrors 55 and 56 are also secured to a second carriage (not shown). When an original image is read, the first carriage is mechanically moved and scans faster two times than the second carriage so as to maintain a prescribed optical path length. Such an optical scanner is driven by a scanner driving motor (not shown). The CCD type image sensor 54 simultaneously reads and converts the original image into an electric signal. The digital copier includes an automatic original document feeder (ADF) 1 reading a sheet like original document. The ADF 1 feeds the original document set on the original document table 2 toward an original document reading sensor 6 by means of feeding rollers 3. When passing through the original document reading sensor 6 in a constant speed, the original document is read by the original document reading sensor 6. Image data is obtained and is then receives various image processing operations, such as MTF correction, filtering, compression, etc. The image data is stored one after another in an image memory. The original document reading sensor 6 may include a contact type full magnification CCD. As shown, the digital copier also includes a writing unit 57 having a laser output unit 58, an imaging lens 59, and a mirror 60. The laser output unit 58 includes a laser diode as a laser light source and a polygon mirror rotated by a motor in a constant high speed. A laser light is irradiated from the writing unit 57 to a photoconductive member 15 included in an image formation system.

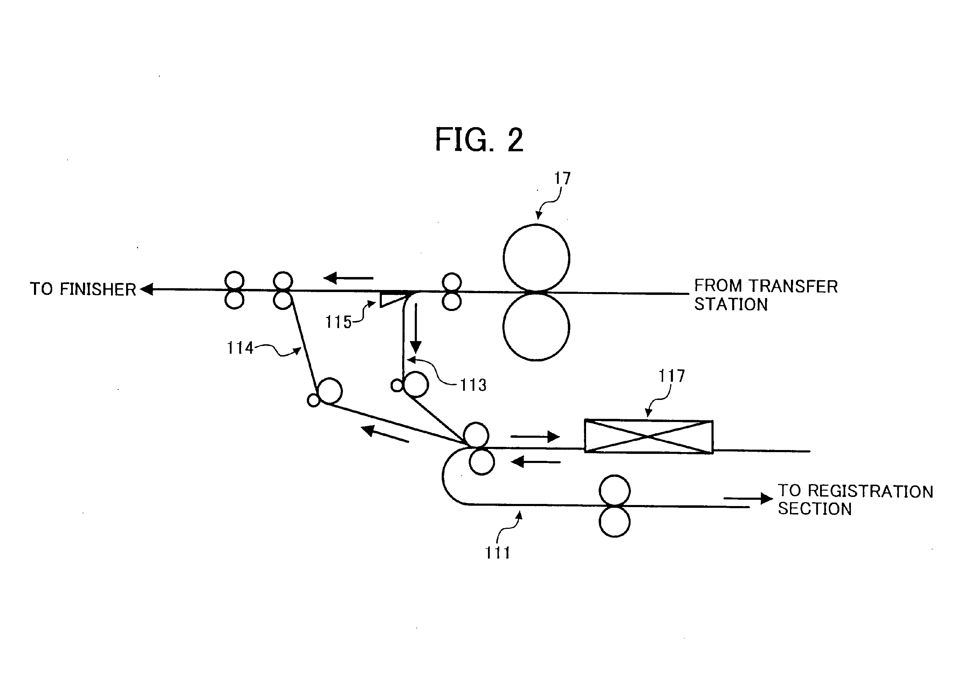

A procedure of printing an image on a PC member 15 is now described. First, a transfer sheet stacked on one of first, second, and third trays 8 to 10 is fed by corresponding one of first, second, and third sheet feeding apparatuses 11, 12, and 13. The transfer sheet is then conveyed by a sheet conveyance unit 14 until it contacts the PC member 15. A laser light transmitted from the writing unit 57 writes image data stored in the memory on the PC member 15. A toner image is then formed when the image data passes through the developing unit 27. The transfer sheet receives transfer of the toner image while being conveyed by the conveyance belt 16 in the same speed with the PC member 15. Subsequently, the fixing unit 17 fixes the toner image to the transfer sheet. A sheet ejection unit 18 then ejects the transfer sheet onto a sheet ejection tray 19. The fixing unit 17 is enabled to perform fixing after warming up few seconds by thinning its roller and employing a large power heater therein. When a duplex copy is formed on a transfer sheet, a transfer sheet fed from one of the sheet feeding trays 8 to 10 and then carrying an image on its one side is conveyed into a duplex sheet entering conveyance route 113 detouring the sheet ejection tray 19 when an inversion route switching pick 115 is switched to a prescribed position shown in Figs. 1 and 2. The transfer sheet then switches back at the inversion unit 112, and is conveyed toward a duplex conveyance unit 111 with its left and right sides being aligned by a sheet jogger 117. The transfer sheet in the duplex conveyance unit 111 is then conveyed to a vertical conveyance unit 14 and receives printing of an image on the other side, and is then ejected. Further, when the transfer sheet is simply inverted and ejected from a body, the transfer sheet having switched back at the inversion unit 112 is launched into an inversion sheet ejection route 114 and is ejected. Further, a transfer sheet can be ejected onto a finisher 200 from the body. In order to staple the finisher 200, the transfer sheets can be temporary stacked onto a staple stack tray 201. When all of the desired number of transfer sheets are stored on the staple stack tray 201, such a sheet bundle is stapled by a stapler unit 202, and is ejected either onto an upper or lower election tray 203 or 204. In contrast, when the stapling is needless, the transfer sheet passes through a straight sheet ejection conveyance route 207, and is similarly ejected onto either the ejection tray 203 or 204. If the ejection trays 203 and 204 is enable to move up and down, a transfer sheet conveyed from either a straight sheet ejection conveyance route 207 or the staple stack tray 201 is selectively ejected onto one of those. Further, sheet detecting devices 205 and 206 can be employed in the respective sheet ejection trays 203 and 204 so as to detect remaining of a transfer sheet having been printed.

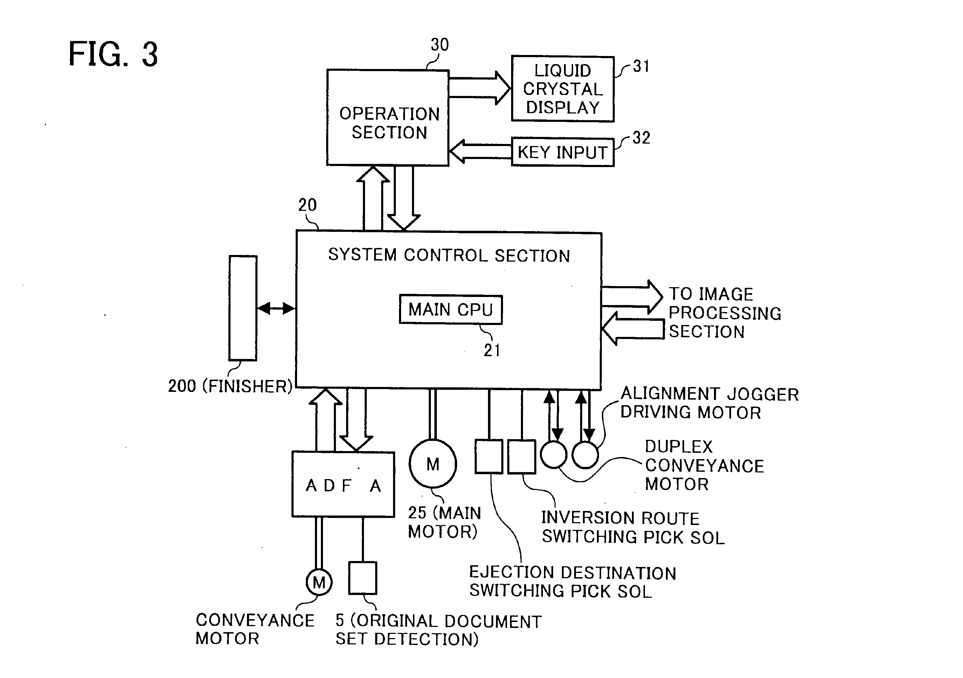

A control unit controlling such a digital copier is now described with reference to Fig. 3. As shown, the control unit includes a system control section 20 including a main CPU 21. The main CPU controls an operation section 30, a liquid crystal display 31, and a key inputting section 32 to input information and output a display. The main CPU also controls the ADF 1, the finisher unit 200, and various loads such as a main motor 25, etc to operate.

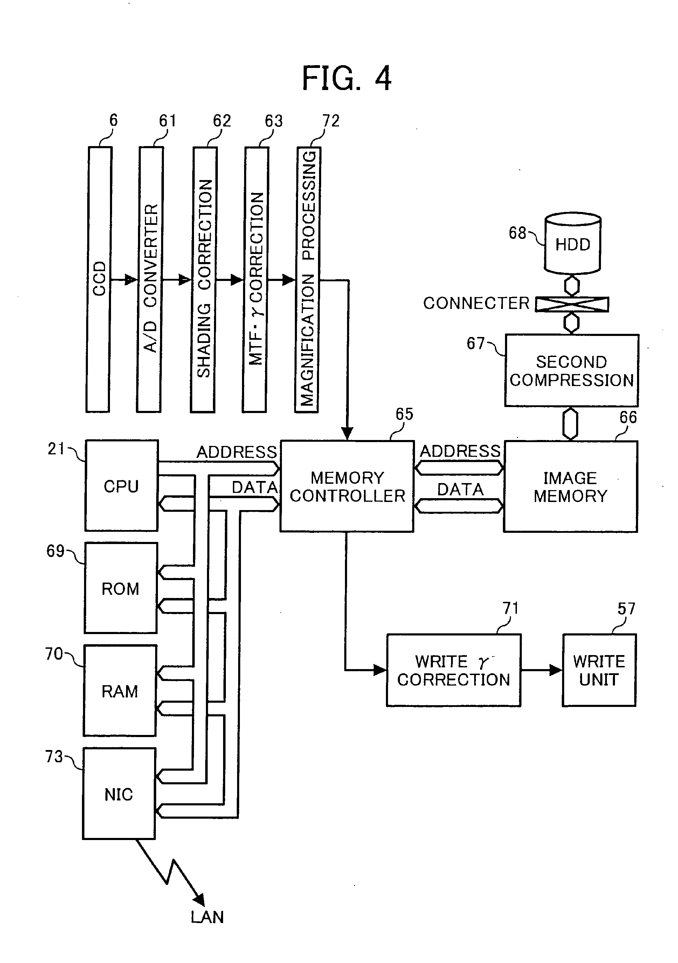

A system control section 20 and an image processing section are now described with reference to Fig. 4. As shown, an image signal read by the original document reading sensor (e.g. CCD) 6 may be converted into a digital signal by an A/D converter 61. The digital signal then receives various processes, such as MTF, Y-corrections, etc., from the respective shading correction section 62 and image processing section 63. The image data processed by a magnification processing section 72 is enlarged or reduced in accordance with a magnification ratio, and is then transferred to an image memory controller 65. The image data receives primary compression processing in the memory controller 65 and is then written into the image memory 66 to form a bitmap. Operations performed heretofore are continued until the entire pages are written into a memory once original is started to read.
Bitmap image data (i.e., the image data) of the image memory 66 receives secondary compression from a secondary compression section 67, and is then written into a hard disk HDD 68. Such an operation is preferably not synchronized with reading and writing of the image data from the original document into the image memory 66.

Specifically, when the image data is stored in the image memory 66 and the HDD is standby state, the bitmap image can be transferred to the HDD 68 at an optional time. Thumbnail image data is simultaneously generated in a multipurpose image format such as "jpeg", "tiff", etc., per a page of the image data written in the image memory 66, or only for a leading page, and is then stored in the HDD 68. Such thumbnail image data is obtained, for example, by thinning each pixel data mapped (aligned) to an image, in both main and sub scanning (horizontal or vertical) directions on a page.

Further, when image data written in the image memory 66 is printed, the image data is transferred from the image memory 66 to the memory controller 65. The image data is then transmitted to the writing unit 57 via the writing Y correction unit 71. The image data transferred to the writing unit 57 then forms a latent image on the PC member 15 and is developed, thereby a copy image is obtained. When the image is not printed (i.e., it is simply stored in the HDD 68), such a printing operation is omitted.

Further, the system control section 20 includes a ROM 69, a RAM 70, and a network interface controller (NIC) 73 beside the main CPU 21. The main CPU 21 analyzes printing details written in a page description language (PDL) and converts those into bit map image data when a printing request is received via the network and NIC 73. Further, the main CPU 21 writes the bit map image data in the image memory 66 and stores the same in the HDD 68 after applying secondary compression thereto. Similar to when copying, the main CPU 21 stores thumbnail image data in the HDD 68 in the "tiff" format or another format as bit map image data. Further, the NIC 73 includes an electronic mail protocol (i.e., a communication procedure). Thus, both mail address of the digital copier and transmission details can be transmitted to an external network in accordance with the electronic mail protocol. The NIC 73 includes a function of a web page server (i.e., information of each page is linked in a network). Thus, when a page is requested to display, an HTML file generated for a plurality of pages can be transmitted to a request source together with job progressing in the digital copier, such as job completion, interruption, abnormality, etc.

Thus, a thumbnail image generating device claimed in claim 1 can be realized in this embodiment by the main CPU 21, and a transmitting device can be realized by the NIC 73.

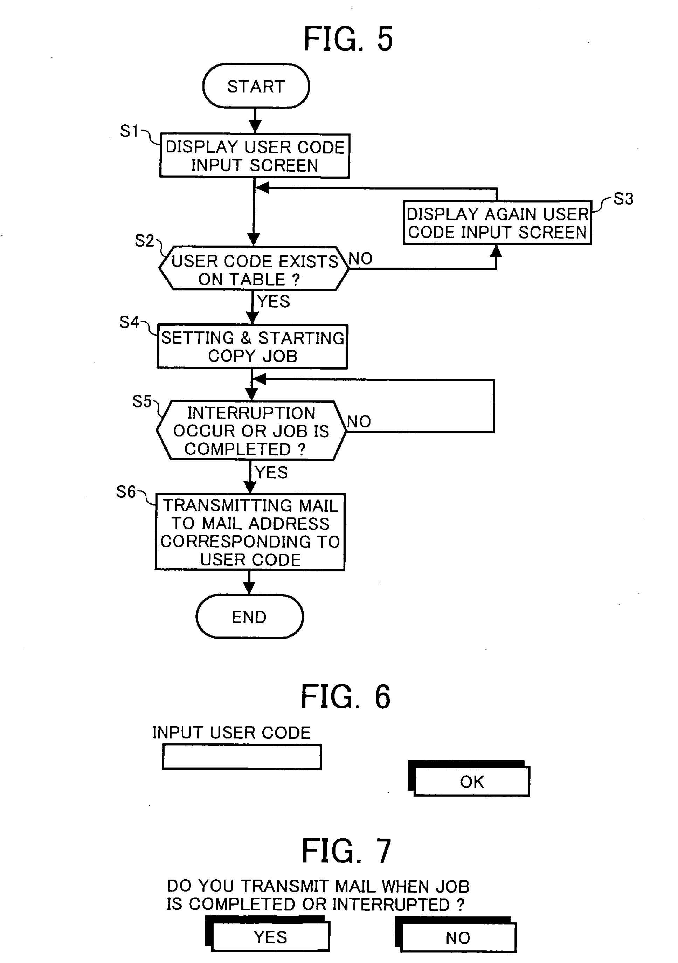

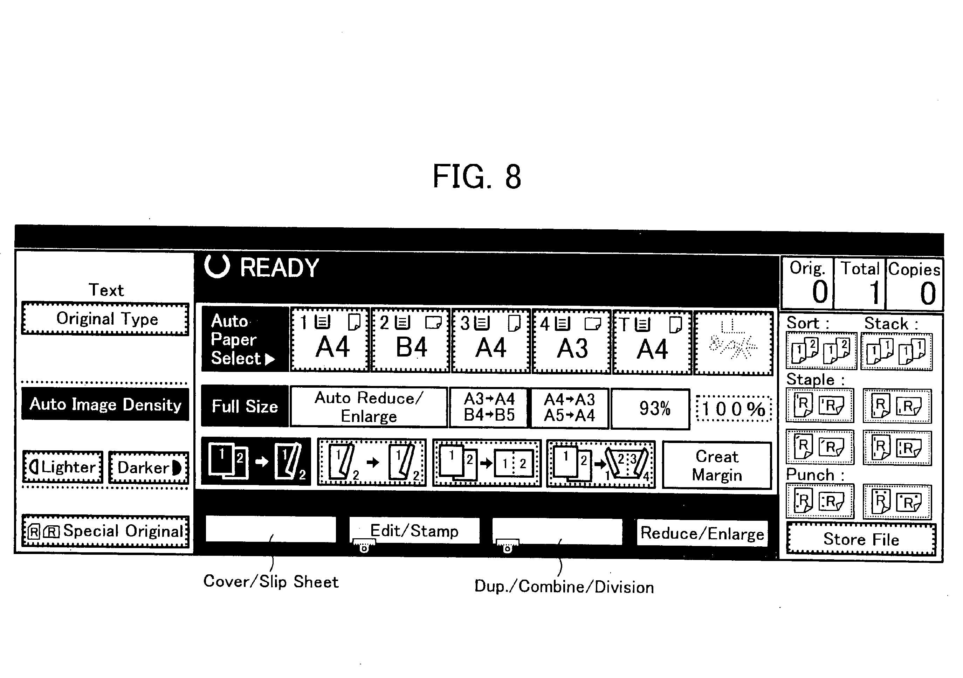

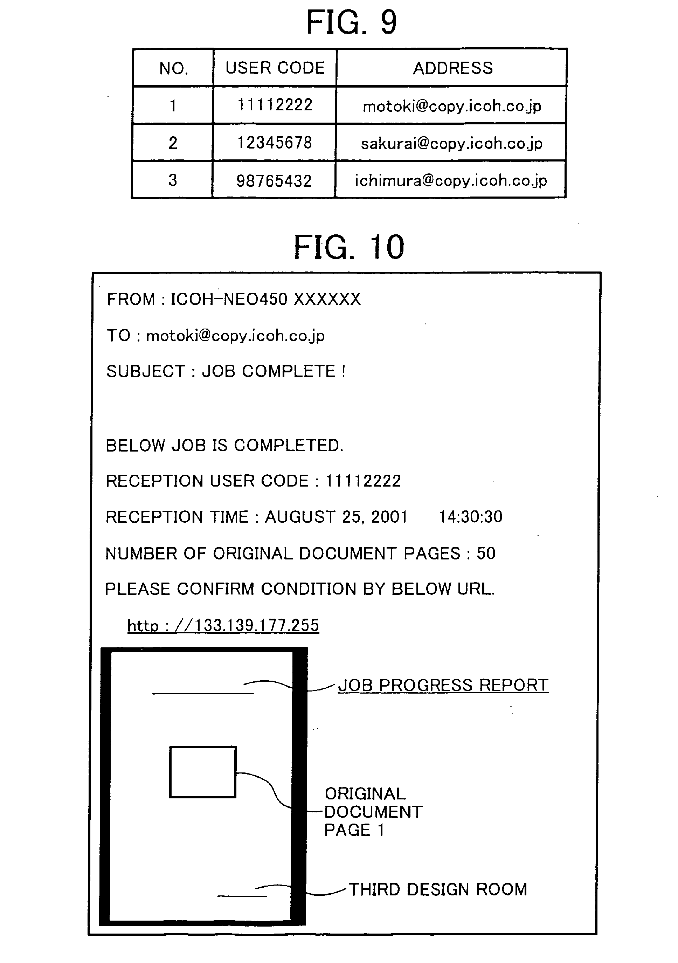

An operation of a copy job designated through a key input section 32 of the digital copier and an operational flow executed when progress of the copy job is reported via the network are now described with reference to Fig. 5. When a copy operation is started, messages promoting a user to input a user code (e.g. a numerical number) are displayed on a screen of the LCD 31 as shown in Fig. 6 (in step S1). When the user inputs the user code through the key input section 32, the main CPU 21 compares it with a user code listed on a user code table (see Fig. 9) previously registered in the HDD 68 and read in the RAM 70 (in step S2). Thus, the user code serves as an authentication number restricting users. A copy only becomes available when such a number exists on the user code table. If the input user code does not exist on the user code table (No, in step S2), the screen of Fig. 6 is displayed again so as to promote the user to input the user code again (in step S3). In contrast, if the input user code exists on the user code table (Yes, in step S2) , the CPU 21 displays a screen allowing the user to designate and request transmission of a job progressing condition report mail (see Fig. 7). Then, if the user selects an indication "Yes" or "NO", information representing selection result is stored and a copy ready screen is simultaneously displayed as shown in Fig. 8. Then, a prescribed copy job is set and starts (in step S4). When the copy job is completed or interrupted (Yes, in step S5), and when "Yes" has been selected in the above, an electronic mail is transmitted to a mail address corresponding to the user code previously input together with a thumbnail image as shown in Fig. 10 (in step S6). For example, when a code "11112222" is input for the user code, and the electronic mail is transmitted to the corresponding address motoki@copy.icoh.co.jp. As shown in Fig. 10, a reception user code, a job progressing condition information (e.g. "completion"), a reception time, a number of original documents, and a URL of a digital copier and so on are included in the electronic mail. A thumbnail image of a first page of a job is also attached thereto. As a result, the user can readily exactly identify a digital copier and a completed or interrupted job when receiving the mail. The above-mentioned operation is explained assuming that a job is copying of the digital copier. However, the similar effect can be obtained when the job is printing. Specifically, a printing job request is similarly transmitted to a digital copier from a terminal apparatus together with a user code (and/or a mail address).

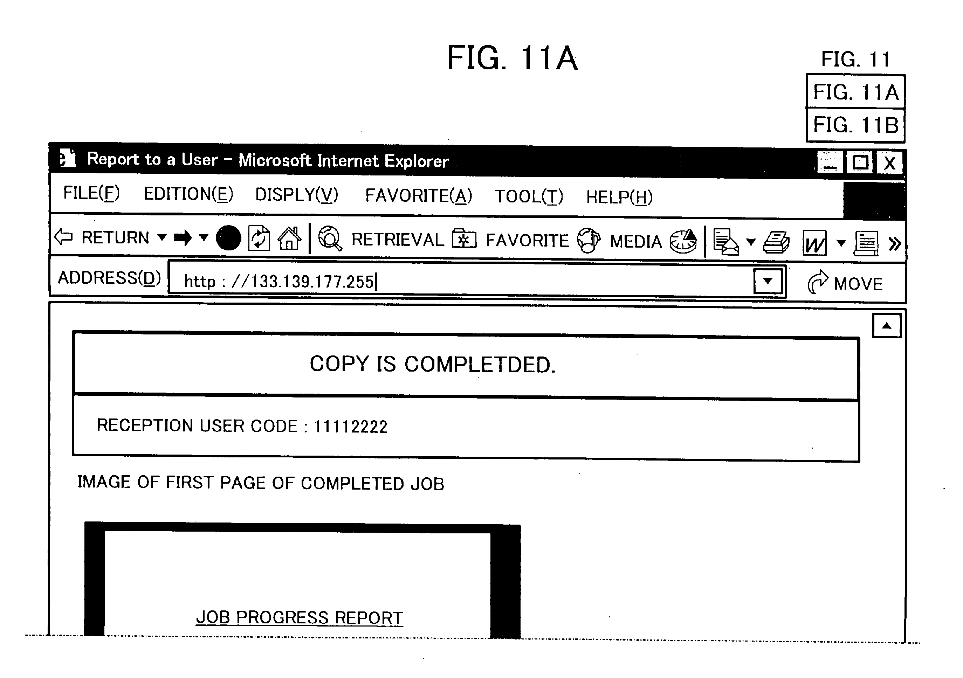

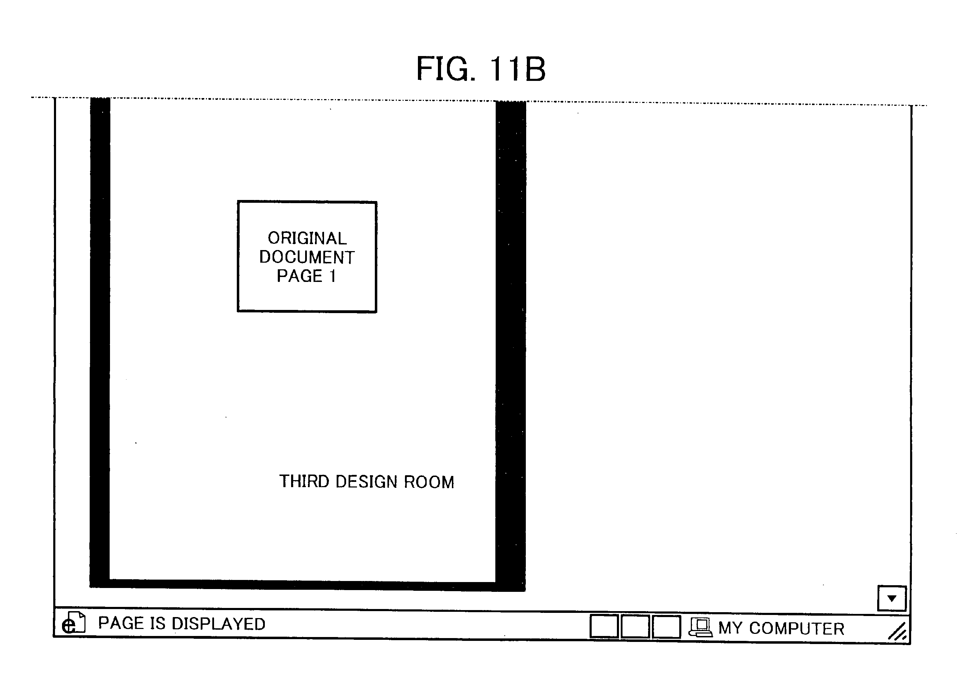

Further, as shown in Fig. 11, when a designated copying or printing job is completed or interrupted by some reason, an electronic mail can be transmitted to a terminal apparatus having a designated mail address, describing job progressing condition information such as completion, interruption, etc., together with a URL of the digital copier without a thumbnail image data. The terminal apparatus can then access an information source defined by the URL by giving instruction through a displayed browser, and obtain and display a thumbnail image data of a first page of the job from the information source.

## Claims

1. An image processing apparatus (1, 15, 17, 20, 27, 50, 57) connectable to a network and operative to perform printing and/or copying jobs upon a request from a user, said image processing apparatus comprising:
a thumbnail image data generating device (65, 66) configured to generate thumbnail image data of image data processed by the job; and
an electronic mail transmitting device (73) configured to transmit an electronic mail including the thumbnail image data to a mail address of the user when the job is completed or interrupted.

2. A method for reporting, via a network, a job progressing condition in an image processing apparatus performing printing and copying jobs upon a request of a user, said method comprising the steps of:
determining if at least one of the jobs is completed or interrupted in the image processing apparatus; and
generating thumbnail image data of image data processed by the job;
transmitting an electronic mail having the thumbnail image data to a mail address of the user when at least one of the jobs is completed or interrupted.

3. A method for reporting a job progressing condition in an image processing apparatus to a terminal apparatus requesting thereto a job via a network, said method comprising the steps of:
determining if at least one of jobs is completed or interrupted in the image processing apparatus;
generating thumbnail image data of image data processed by the job, said thumbnail image data is stored in an information source provided in the image processing apparatus;
transmitting an electronic mail having a URL representing the information source to a mail address assigned to the terminal apparatus when at least one of the jobs is completed or interrupted;
allowing the terminal apparatus having the mail address to access the information source via a browser displayed on the terminal apparatus; and
allowing the terminal apparatus to obtain the thumbnail image data.

4. A system comprising an image processing apparatus and a terminal apparatus linked via a network, said image processing apparatus comprising:
determining means for determining if at least one of jobs is completed or interrupted in the image processing apparatus;
generating means for generating thumbnail image data of image data processed by the job, said thumbnail image data is stored in an information source provided in the image processing apparatus; and
transmitting means for transmitting an electronic mail having a URL representing the information source to a mail address assigned to the terminal apparatus when at least on of the jobs is completed or interrupted;
the terminal apparatus comprising:
accessing means for allowing the terminal apparatus having the mail address to access the information source via a browser displayed on the terminal apparatus; and
obtaining means for allowing the terminal apparatus to obtain the thumbnail image data.

5. The apparatus of claim 1, the method of claim 2 or 3, or the system of claim 4, wherein said mail address is associated with a user code representing a user, wherein said image processing apparatus is operable when the user code is input and authenticated.
